# EUROPÄISCHE PATENTSCHRIFT

(11) **EP 1 213 461 B1**
(45) Veröffentlichungstag und Bekanntmachung des Hinweises auf die Patenterteilung: **03.08.2005**
(21) Anmeldenummer: 01124029.8
(22) Anmeldetag: 09.10.2001
(51) Int. Cl.: F02M 21/02, F02M 21/06, F02D 19/02, F02B 43/00

(54) **Verfahren und Anordnung zur Bereitstellung eines zündfähigen Arbeitsgases aus einem Kryo-Kraftstoff**
Method and device to supply an ignitable working gas from cryogenic fuel
Procédé et dispositif d'alimentation en fluide moteur de carburant cryogénique

(30) Priorität: 07.12.2000 DE 10060789
(43) Veröffentlichungstag der Anmeldung: 12.06.2002
(73) Patentinhaber: Bayerische Motoren Werke Aktiengesellschaft, 80809 München (DE)
(72) Erfinder: Ringler, Jürgen, 86438 Kissing (DE); Fickel, Hans-Christian, 85368 Moosburg (DE)

(56) Entgegenhaltungen:
- EP-A- 0 760 424
- DD-A- 214 172
- DE-A- 19 602 881
- DE-A- 19 817 324
- DE-A- 19 910 893
- DE-C- 668 602

## Beschreibung

Die Erfindung betrifft ein Verfahren und eine Anordnung zur Bereitstellung eines zündfähigen Arbeitsgases aus einem Kryo-Kraftstoff in einem Brennraum einer Brennkraftmaschine.

Die Speicherung von Kryo-Kraftstoffen - beispielsweise Wasserstoff - d.h. Kraftstoffen deren Siedetemperatur bei dem im Tank herrschenden Druck unterhalb üblicher Umgebungstemperaturen liegt, kann in isolierten Tankanordnungen erfolgen. Letztere, auch als Kryo-Tanks bezeichnete Tankanordnungen zeichnen sich neben einem vergleichsweise geringen Eigengewicht auch durch ein günstiges Bauraum/Speicherkapazitäts-Verhältnis aus. Die zur flüssigen Speicherung des Kryokraftstoffes vorgesehenen Tankanordnungen werden vorzugsweise unter einem vorbestimmten Überdruck mit unterkühltem, flüssigem Kraftstoff befüllt. Das durch den Tankdruck bestimmte Temperaturniveau kann durch Kühleinrichtungen oder durch Verdampfen von Kraftstoff, aufrecht erhalten werden

Aus DE 43 20 556 A1 ist ein Speicherbehälter für kryogene Medien, insbesondere ein Kfz-Speicherbehälter für flüssigen Wasserstoff bekannt, aus welchem das kryogene Medium in gasförmigem oder flüssigem Zustand abgeleitet werden kann. Das in flüssigem Zustand abgeleitete kryogene Medium kann in einem kühlwasserbeheizten Wärmetauscher erwärmt und hierbei verdampft werden. Ein Teil des derart verdampften kryogenen Mediums kann über eine Verdampferleitung durch den Speicherbehälter geleitet werden um hierbei das in dem Speicherbehälter bevorratete kryogene Medium zu erwärmen. Der über diesen Speichertank bereitgestellte Kraftstoff kann über einen Mischer in einem vorgegebenen stöchiometrischen Verhältnis mit Ansaugluft vermischt werden. Die so gebildete Arbeitsgasmischung gelangt über eine Einlassventileinrichtung in den Brennraum einer Brennkraftmaschine.

Aus EP 0 760 424 A2 ist ein Direkteinspritzsystem für eine Brennkraftmaschine bekannt bei welchem gasförmiger Kraftstoff über eine Ventileinrichtung separat von der Ansaugluft in einen Arbeitsraum jener Brennkraftmaschine eingeleitet werden kann. Der Kraftstoff kann unter Verwendung eines Wärmetauschers durch die Abwärme der Brennkraftmaschine oder auch durch die Ansaugluft der Brennkraftmaschine erwärmt werden.

Aus DE 196 02 881 A1 ist ein Verfahren zur Bereitstellung eines Kryokraftstoff-Luftgemisches für eine Brennkraftmaschine bekannt, bei welchem die Ansaugluft vor Einleitung in den Arbeitsraum der Brennkraftmaschine mit Kraftstoff vermischt wird, wobei das Kältepotential des Kraftstoffes zur Kühlung der Ansaugluft genutzt werden kann indem die Ansaugluft durch einen Wärmetauscher geleitet wird.

Aus DE 668 602 ist ein Verfahren für den Betrieb einer Brennkraftmaschine mit Wasserstoff bekannt. Nach diesem Verfahren wird das Kühlpotential des Kraftstoffes zur Abkühlung der Ansaugluft genutzt. Die Kühlung erfolgt indem die Ansaugluft durch einen Wärmetauscher geleitet wird, in welchem ein erster Wärmetransfer auf den bereits in gasförmigem Zustand einer Tankeinrichtung entnommenen Kraftstoff erfolgt. Nachfolgend wird die vorgekühlte Luft im Bereich des Tankmantels weiter durch den abgeführten Kraftstoff gekühlt.

Der Erfindung liegt die Aufgabe zugrunde, ein Verfahren und eine Anordnung zur Bereitstellung eines zündfähigen Arbeitsgases aus einem Kryo-Kraftstoff zu schaffen bei welchem eine vorgegebene stöchiometrische Zusammensetzung des Arbeitsgases auf zuverlässige Weise in einem engen Toleranzbereich eingehalten werden kann und das seitens des Kraftstoffes bereitgestellte Kältepotential in einer gegenüber den bekannten Ansätzen verbesserten Weise für die Kühlung der Ansaugluft herangezogen werden kann.

Diese Aufgabe wird erfindungsgemäß gelöst durch ein Verfahren, zur Bereitstellung eines brennfähigen Arbeitsgases für eine Brennkraftmaschine aus einer ein Oxydationsmittel enthaltenden Gasfraktion und einem kryogen gespeicherten Kryo-Kraftstoff, bei welchem der Kryo-Kraftstoff aus einem wärmeisolierten Kraftstoffvorratsbehältnis entnommen wird, der entnommene Kraftstoff separat von der das Oxydationsmittel enthaltenden Gasfraktion in einen Brenn- oder Arbeitsraum einer Brennkraftmaschine eingebracht wird sobald in dem Brennraum ein vorgegebener Mindest-Kompressionsdruck herrscht, der Kryo-Kraftstoff auf einem Speise-Druckniveau bereitgehalten wird, das wenigstens dem vorgegebenen Mindest-Kompressionsdruck entspricht und der Kraftstoff durch die der Brennkraftmaschine zugeführte Ansaugluft erwärmt wird, wobei die Erwärmung des Kraftstoffs durch die Ansaugluft unter Einbindung einer Dosiereinrichtung erfolgt, zur Dosierung eines der Kraftstofferwärmung dienenden Ansaugluft-Teilstromes.

Dadurch wird es auf vorteilhafte Weise möglich, das brennfähige Arbeitsgas im Rahmen eines inneren Gemischbildungsprozesses zu bilden, wobei der Kraftstoff auf zuverlässige Weise, präzise dosiert in den Brenn- oder Arbeitsraum der Brennkraftmaschine eingebracht werden kann, ohne dass hierzu in aufwendiger Weise der gasförmige Kraftstoff komprimiert werden muss und wobei zudem das Kältepotential des Kryo-Kraftstoffes in regelungstechnisch besonders vorteilhafter Weise für die Kühlung der Ansaugluft zur Verfügung steht. Hierdurch ergibt sich insgesamt ein robuster und in geringerem Maße wartungsrelevanter Aufbau der Brennkraftmaschine sowie des Arbeitsgasbereitungssystemes.

Gemäß einer besonders bevorzugten Ausführungsform der Erfindung wird der Kryo-Kraftstoff in dem Kryo-Tank auf einem Druckpegel gespeichert, der im Bereich des Speise-Druckniveaus liegt. Dadurch wird es auf vorteilhafte Weise möglich, den Kraftstoff in gasförmigem Zustand separat von der Ansaugluft in den Brennraum einer Brennkraftmaschine einzuspeisen. In vorteilhafter Weise wird hierdurch die Gefahr etwaiger Rückzündungen über eine Einlaßventilanordnung, verringert.

Vorzugsweise wird das Speise-Druckniveau erreicht, indem der Kraftstoff auf eine, bei dem Speise-Druck herrschende Siedetemperatur erwärmt wird. Die Erwärmung des Kraftstoffes erfolgt gemäß einer besonders bevorzugten Ausführungsform der Erfindung bereits in dem Tank über einen in den Tank eingesetzten Wärmetauscher.

Dieser Wärmetauscher ist gemäß einer besonders bevorzugten Ausführungsform der Erfindung derart ausgebildet, dass die zur Aufheizung erforderliche Wärme über die der Brennkraftmaschine zugeführte Ansaugluft bereitgestellt wird. Dies kann insbesondere dadurch erreicht werden, dass ein dosierter Ansaugluftteilstrom über eine Leitungseinrichtung durch den Kryo-Tank hindurch geführt wird.

Vorzugsweise wird zumindest der abgezweigte Teilstrom der Ansaugluft auf eine Temperatur abgekühlt, bei welcher der überwiegende Teil des in der Ansaugluft enthaltenen Wassers ausfällt. Das ausfallende Wasser kann abgeleitet und zur definierten Brenngasbefeuchtung bei bestimmten Lastzuständen herangezogen werden. Die Temperaturverteilung in dem zur Erwärmung des Kraftstoffes vorgesehenen Wärmetauschers ist vorzugsweise derart abgestimmt, dass im wesentlichen keine Eisbildung erfolgt. Der in dem Kryo-Tank aufgenommene Kryo-Kraftstoff wird vorzugsweise auf eine Temperatur aufgeheizt die der bei dem Speisedruck herrschenden Siedetemperatur entspricht.

Gemäß einer besonders bevorzugten Ausführungsform der Erfindung herrscht in dem Kryo-Tank ein Druck von mehr als 50 bar. Bei diesem Tankdruck ist es möglich, den Kryo-Kraftstoff in die bei einem Verdichtungsverhältnis im Bereich von bis zu 1/14 verdichtete, sauerstoffhaltige Gasfraktion einzublasen. Der Zündvorgang des derart gebildeten Arbeitsgases wird vorzugsweise durch eine Fremdzündung ausgelöst.

In besonders vorteilhafter Weise herrscht in dem Kryo-Tank ein Kraftstoffdruck von mehr als 100 bar. Hierdurch wird es möglich, den zur Bildung des brennfähigen Arbeitsgases erforderlichen Zeitraum noch weiter zu verkürzen. Zudem wird es möglich, eine Zündung des hierbei gebildeten Arbeitsgases durch einen Selbstzündungsprozess zu erreichen.

In vorrichtungstechnischer Hinsicht wird die eingangs angegebene Aufgabe erfindungsgemäß gelöst durch eine Anordnung zur Bereitstellung eines brennfähigen Arbeitsgases aus kryogen gespeichertem Kryo-Kraftstoff und sauerstoffhaltiger Ansaugluft in dem Brennraum einer Brennkraftmaschine, mit einem Kraftstoffvorratsbehältnis, zur Bevorratung eines brennfähigen Arbeitsgases, einer Ableitungseinrichtung zur Ableitung von Kryo-Kraftstoff aus dem Kraftstoffbehältnis, einer Einspeiseeinrichtung zur Einspeisung des abgeleiteten Kryo-Kraftstoffes separat von der Ansaugluft in einen Brenn- oder Arbeitsraum einer Brennkraftmaschine, wobei das Kraftstoffbehältnis als Druckkessel für einen Tankinnendruck ausgelegt ist, der wenigstens dem Einspeisedruck des Kraftstoffes in die verdichtete Ansaugluft entspricht und ein Wärmetauscher vorgesehen ist, zur Erwärmung des Kryo-Kraftstoffes durch die seitens der Brennkraftmaschine bezogene Ansaugluft, gekennzeichnet durch eine Dosiereinrichtung, zur Dosierung eines dem Wärmetauscher zugeführten Ansaugluft-Teilstromes.

Hierdurch wird es auf vorteilhafte Weise möglich, den durch die Ansaugluft in den Tank eingebrachten Wärmestrom präzise zu dosieren. Das Arbeitsgas kann auf zuverlässige Weise im Brennraum einer Brennkraftmaschine gebildet werden. Durch die Abkühlung der Ansaugluft ergibt sich auch bei höheren Verdichtungsverhältnissen eine geringere Neigung zu einem Motorklopfen.

Vorzugsweise ist das Kraftstoffbehältnis mit einer Heizeinrichtung versehen, zur Aufheizung des Kraftstoffes auf eine beim Einspeisedruck herrschende Siedetemperatur. Hierdurch wird es möglich, einen Druckabfall infolge des Verdampfungswärmeentzuges, zu vermeiden.

Die Heizeinrichtung umfasst in vorteilhafter Weise einen Wärmetauscher, der mit einem Ansaugluftkanal versehen ist, zum Erwärmen des Kraftstoffes über die seitens der Brennkraftmaschine angesaugte Luft. Hierdurch wird es auf vorteilhafte Weise möglich, die angesaugte Luft durch das Kältepotential des Kraftstoffes abzukühlen und hierdurch einen größeren Füllungsgrad des Arbeitsraumes einer Brennkraftmaschine zu erreichen.

Weitere vorteilhafte Einzelheiten der Erfindung ergeben sich aus der nachfolgenden Beschreibung in Verbindung mit der Zeichnung. Es zeigen:
**Fig.1** eine Schema-Darstellung eines Systems zum Betreiben einer Brennkraftmaschine bei innerer Gemischbildung, mit einem wärmeisolierten, beheizbaren Drucktank, wobei in dem Drucktank ein Kraftstoffdruck herrscht der oberhalb eines Kraftstoffeinspeisedruckes liegt;
**Fig.2** eine Schema-Darstellung einer bevorzugten Ausführungsform eines erfindungsgemäßen, Systems bei welchem die Beheizung des wärmeisolierten Drucktankes über einen geregelten Teilstrom der seitens der Brennkraftmaschine bezogenen Ansaugluft erfolgt.

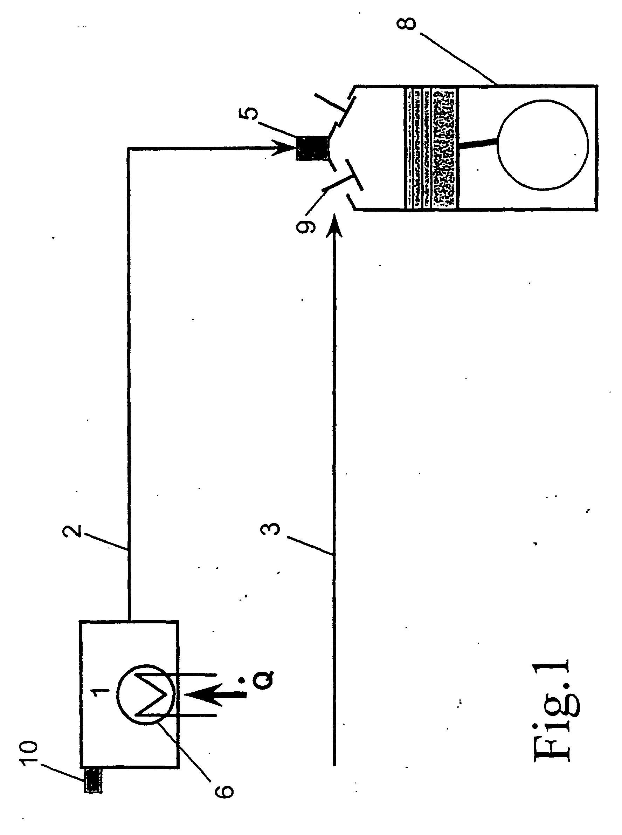

Das in Figur 1 schematisch dargestellte System umfaßt einen thermisch isolierten Kryo-Tank 1 in welchem ein verflüssigter, gekühlter Kraftstoff bevorratet ist. Bei dem hier gezeigten System ist der Kryo-Tank 1 als Wasserstoff-Drucktank ausgebildet, wobei im Inneren des Kryo-Tanks 1 ein Druck im Bereich von 140 bar herrscht.

An den Kryo-Tank 1 ist eine Leitungseinrichtung 2 angeschlossen. Diese Leitungseinrichtung 2 ist ebenfalls thermisch isoliert ausgebildet. Über die Leitungseinrichtung 2 kann selektiv flüssiger oder gasförmiger Kraftstoff aus dem Kryo-Tank 1 entnommen werden.

Die Leitungseinrichtung 2 führt zu einem Einspeiseventil 5 über welches in zeitlich gesteuerter Weise eine nach Maßgabe eines vorgegebenen stöchiometrischen Verhältnis definierte Kraftstoffmenge in einen Brenn- oder Arbeitsraum einer Brennkraftmaschine 8 einbringbar ist.

Die Zuleitung der sauerstoffhaltigen Gasfraktion des Arbeitsgases erfolgt über eine Leitung 3 die über eine taktgesteuerte Einlaßventileinrichtung 9 in den Brenn- und Arbeitsraum mündet.

Die Ansteuerung des Einspeiseventiles 5 und der Einlaßventileinrichtung 9 erfolgt vorzugsweise derart, dass der unter dem Tankinnendruck stehende Kraftstoff erst nach Schließen der Einlaßventileinrichtung 9 in den Brenn- oder Arbeitsraum eingespeist wird.

Im Inneren des als Druckkessel ausgebildeten Kryo-Tankes 1 ist eine Heizeinrichtung 6 vorgesehen, über welche dem bevorrateten Kraftstoff ein definierter Wärmestrom Q° zugeführt werden kann. Die dem Kryo-Tank 1 zugeführte Wärmemenge wird in vorteilhafter Weise auf den momentanen Betriebszustand der Brennkraftmaschine, insbesondere den momentanen Kraftstoffbezug derart abgestimmt, dass die über den Kraftstoff abgeführte Wärme kontinuierlich nachgebracht wird.

Zum Befüllen des Kryo-Tankes 1 ist eine Druckventilanordnung 10 vorgesehen, über welche kryogener Kraftstoff unter Aufrechterhaltung des Soll-Tankdruckes nachgefüllt werden kann.

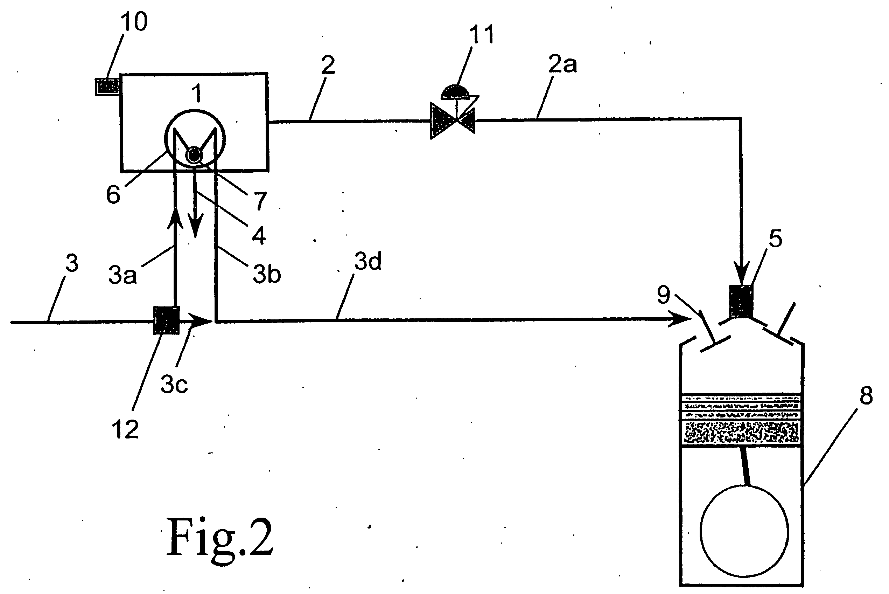

In den beiden Figuren der Zeichnung sind gleiche Komponenten mit gleichen Bezugszeichen versehen. Die im folgenden nicht wiederholten Erläuterungen zum Ausführungsbeispiel nach Fig. 1 gelten sinngemäß auch für Fig.2.

Bei dem in Fig.2 gezeigten System umfasst die Heizeinrichtung 6 einen Wärmetauscher über welchen der zur Aufheizung erforderliche Wärmestrom über die seitens der Brennkraftmaschine bezogene Ansaugluft bereitgestellt wird. Hierzu ist in der Ansaugluftleitung 3 ein Dosierventil 12 vorgesehen, über welches ein definierter Teilstrom der Ansaugluft über eine Abzweigleitung 3a zu der Heizeinrichtung 6 gelangt. Der verbleibende Teil der Ansaugluft kann ungekühlt über eine Abzweigleitung 3c in einen, in Strömungsrichtung abfolgenden und zu der Einlässventileinrichtung 9 führenden, Leitungsabschnitt 3d strömen. Die in der Heizeinrichtung 6 gekühlte Teilmenge der Ansaugluft gelangt über einen Leitungsabschnitt 3b ebenfalls in den Leitungsabschnitt 3d. Der Druck in dem Kryo-Tank 1 liegt bei der hier dargestellten Ausführungsform im Bereich von 165 bis 185bar. Hierdurch wird es möglich, den Kraftstoff erst unmittelbar zum Zündbeginn in die verdichtete Ansaugluft einzubringen.

Die Heizeinrichtung 6 ist mit einer Kondenswasserableitungseinrichtung 7 versehen, über welche etwaiges, im Rahmen der Kühlung der Ansaugluft ausfallendes Wasser über eine Kondenswasserleitung 4 abgeleitet werden kann. Das abgeleitete Kondenswasser kann zunächst bevorratet und bei Betriebszuständen der Brennkraftmaschine mit hohen Verbrennungstemperaturen dem Arbeitsgas beigemischt werden, zur Verringerung der Klopfneigung.

Die über die Leitung 3 zugeführte Luft kann zur Steigerung des Zylinderfüllungsgrades auch über einen Lader gefördert werden. Die über die Dosiereinrichtung 12 vorgenommen Aufteilung des Ansaugluftstromes richtet sich im wesentlichen nach der Temperatur der Ansaugluft und dem Wärmeübergangskennfeld des Wärmetauschers der Heizeinrichtung 6. Hierdurch wird erreicht, dass aufgrund der vergleichsweise langsamen Schwankung der Temperatur der Ansaugluft über diese unmittelbar die in den Kryo-Tank eingebrachte Wärmemenge bestimmt ist.

Unter Ansaugluft ist im vorliegenden Fall ein gasförmiges Medium zu verstehen das zumindest eine als Oxydationsmittel wirkende Gasfraktion enthält. Die Zuleitung der Ansaugluft zu dem Einlassbereich der Brennkraftmaschine kann auch unter einem Druck erfolgen, der oberhalb des Umgebungsdruckes liegt. Neben Wasserstoff eignet sich die erfindungsgemäße Lösung insbesondere auch für niedrig siedende Kohlenwasserstoffverbindungen. Bei der hier nur vereinfacht dargestellten Brennkraftmaschine handelt es sich um eine Hubkolbenmaschine. Der Gaswechsel erfolgt vorzugsweise nach dem 4-Takt Prinzip über zeitlich gesteuerte Ventile. Es ist möglich, die erfindungsgemäß vorgeschlagene Arbeitsgasbereitung auch bei Zweitakt-Verfahren vorzunehmen. Die Zündung des verdichteten Arbeitsgases kann durch Fremd- oder Selbstzündung erfolgen.

## Patentansprüche

1. Verfahren, zur Bereitstellung eines brennfähigen Arbeitsgases für eine Brennkraftmaschine (8) aus einer ein Oxydationsmittel enthaltenden Gasfraktion und einem kryogen gespeicherten Kryo-Kraftstoff, bei welchem der Kryo-Kraftstoff aus einem wärmeisolierten Kraftstoffvorratsbehältnis (1) entnommen wird, und der entnommene Kraftstoff separat von der das Oxydationsmittel enthaltenden Gasfraktion in einen Brenn- oder Arbeitsraum einer Brennkraftmaschine (8) eingebracht wird, sobald in dem Brennraum ein vorgegebener Mindest-Kompressionsdruck herrscht, wobei der Kryo-Kraftstoff auf einem Speise-Druckniveau bereitgehalten wird, das wenigstens dem vorgegebenen Mindest-Kompressionsdruck entspricht und der Kraftstoff durch die der Brennkraftmaschine (8) zugeführte Ansaugluft erwärmt wird, **dadurch gekennzeichnet, dass** die Erwärmung des Kraftstoffs durch die Ansaugluft unter Einbindung einer Dosiereinrichtung (12) erfolgt, zur Dosierung eines der Kraftstofferwärmung dienenden Ansaugluft-Teilstromes (3a).

2. Verfahren nach Anspruch 1, **dadurch gekennzeichnet, dass** der Kryo-Kraftstoff in dem Kryo-Tank (1) auf einem Druckpegel gespeichert wird, der im Bereich des Speise-Druckniveaus liegt.

3. Verfahren nach Anspruch 1 oder 2, **dadurch gekennzeichnet, dass** das Speise-Druckniveau erreicht wird, indem der Kraftstoff auf eine, bei dem Speise-Druck herrschende Siedetemperatur erwärmt wird.

4. Verfahren nach wenigstens einem der Ansprüche 1 bis 3, **dadurch gekennzeichnet, dass** der Kraftstoff in dem Tank (1) auf die beim Speisedruck herrschende Siedetemperatur aufgeheizt wird.

5. Verfahren nach wenigstens einem der Ansprüche 1 bis 4, **dadurch gekennzeichnet, dass** die Aufheizung durch eine in dem Kryo-Tank vorgesehene Wärmequelle (6) erfolgt.

6. Verfahren nach wenigstens einem der Ansprüche 1 bis 5, **dadurch gekennzeichnet, dass** zumindest ein Teilstrom (3a) der Ansaugluft auf eine Temperatur abgekühlt wird, bei welcher der überwiegende Teil der in der Ansaugluft enthaltene Wasseranteil ausfällt.

7. Verfahren nach wenigstens einem der Ansprüche 1 bis 6, **dadurch gekennzeichnet, dass** der Kryo-Kraftstoff in dem Kryo-Tank (1) die bei dem Speisedruck herrschende Siedetemperatur hat.

8. Verfahren nach wenigstens einem der Ansprüche 1 bis 7, **dadurch gekennzeichnet, dass** in dem Kryo-Tank (1) ein Druck von mehr als 50 bar herrscht.

9. Verfahren nach wenigstens einem der Ansprüche 1 bis 7, **dadurch gekennzeichnet, dass** in dem Kryo-Tank (1) ein Kraftstoffdruck von.mehr als 100 bar herrscht.

10. Anordnung zur Bereitstellung eines brennfähigen Arbeitsgases aus kryogen gespeichertem Kryo-Kraftstoff und sauerstoffhaltiger Ansaugluft in dem Brennraum einer Brennkraftmaschine (8), mit einem Kraftstoffvorratsbehältnis (1), zur Bevorratung eines brennfähigen Arbeitsgases, einer Ableitungseinrichtung (2) zur Ableitung von Kryo-Kraftstoff aus dem Kraftstoffbehältnis, einer Einspeiseeinrichtung (5) zur Einspeisung des abgeleiteten Kryo-Kraftstoffes separat von der Ansaugluft in einen Brenn- oder Arbeitsraum einer Brennkraftmaschine (8), wobei das Kraftstoffbehältnis (1) als Druckkessel für einen Tankinnendruck ausgelegt ist, der wenigstens dem Einspeisedruck des Kraftstoffes in die verdichtete Ansaugluft entspricht und ein Wärmetauscher (6) vorgesehen ist, zur Erwärmung des Kryo-Kraftstoffes durch die seitens der Brennkraftmaschine (8) bezogene Ansaugluft, **gekennzeichnet durch** eine Dosiereinrichtung (12), zur Dosierung eines dem Wärmetauscher (6) zugeführten Ansaugluft-Teilstromes (3a).

11. Anordnung nach Anspruch 10, **dadurch gekennzeichnet, dass** das Kraftstoffbehältnis (1) mit einer Heizeinrichtung (6) versehen ist, zur Aufheizung des Kraftstoffes auf eine beim Einspeisedruck herrschende Siedetemperatur.

## Claims

1. A method of preparing a combustible working gas for an internal combustion engine (8) from an oxidant-containing gas fraction and a cryogenically stored cryofuel, wherein the cryofuel is taken from a heat-insulated fuel storage container (1) and the taken fuel, separately from the oxidant-containing gas fraction, is introduced into a combustion or work chamber of an internal combustion engine (8) as soon as the pressure in the chamber reaches a set minimum level, wherein the cryogenic fuel is prepared at a feed pressure level at least equal to the set minimum pressure and the fuel is heated by the intake air supplied to the engine (8), **characterised in that** heating of the fuel by the intake air is effected via a metering device (12) for supplying a metered part-stream (3a) of intake air for heating the fuel.

2. A method according to claim 1, **characterised in that** the cryofuel is stored in the cryotank (1) at a pressure approximately equal to the feed pressure.

3. A method according to claim 1 or 2, **characterised in that** the feed pressure is reached by heating the fuel to a boiling temperature which prevails at the feed pressure.

4. A method according to at least one of claims 1 to 3, **characterised in that** the fuel in the tank (1) is heated to the boiling temperature prevailing at the feed pressure.

5. A method according to at least one of claims 1 to 4, **characterised in that** heating is effected by a heat source (6) provided in the cryotank.

6. A method according to at least one of claims 1 to 5, **characterised in that** at least a part flow (3a) of intake air is cooled to a temperature at which most of the water in the intake air precipitates.

7. A method according to at least one of claims 1 to 6, **characterised in that** the cryofuel in the cryotank (1) has the boiling temperature prevailing at the feed pressure.

8. A method according to at least one of claims 1 to 7, **characterised in that** a pressure of more than 50 bar prevails in the cryotank (1).

9. A method according to at least one of claims 1 to 7, **characterised in that** a fuel pressure of more than 100 bar prevails in the cryotank (1).

10. An arrangement for preparing a combustible working gas from cryogenically stored cryofuel and oxygen-containing intake air in the combustion chamber of an internal combustion engine (8), comprising a fuel storage container (1) for storing a combustible working gas, a discharge device (2) for drawing off cryofuel from the fuel container, and a feed device (5) for feeding the drawn-off cryofuel separately from the intake air into a combustion or work chamber of an internal combustion engine (8), wherein the fuel container (1) is designed as an air-pressure tank for an internal tank pressure at least equal to the feed pressure of the fuel into the compressed intake air and a heat exchanger (6) is provided for heating the cryofuel via the intake air drawn in by the engine (8), **characterised by** a metering device (12) for metered supply of a part flow (3a) of intake air to the heat exchanger (6).

11. An arrangement according to claim 10, **characterised in that** the fuel container (1) is provided with a heater (6) for heating the fuel to a boiling temperature prevailing at the feed pressure.

## Revendications

1. Procédé destiné à fournir un gaz de travail inflammable pour un moteur à combustion interne (8) à partir d'une fraction gazeuse contenant un agent d'oxydation et d'un carburant cryogénique stocké sous forme cryogénique, selon lequel le carburant cryogénique est prélevé d'un réservoir de stockage de carburant (1) thermiquement isolé, et le carburant prélevé est introduit séparément de la fraction gazeuse contenant l'agent d'oxydation dans une chambre de combustion ou une chambre de travail d'un moteur à combustion interne (8) dès qu'une pression minimale de compression prédéfinie règne dans la chambre de combustion, le carburant cryogénique est maintenu à un niveau de pression d'alimentation qui correspond au moins à la pression minimale de compression prédéfinie et le carburant est chauffé par l'air d'aspiration acheminé au moteur à combustion interne (8),
**caractérisé en ce que**
le carburant est chauffé par l'air d'aspiration en utilisant une installation de dosage (12) pour doser un courant partiel (3a) d'air d'aspiration qui sert à chauffer le carburant.

2. Procédé selon la revendication 1,
**caractérisé en ce que**
le carburant cryogénique est stocké dans le réservoir cryogénique (1) à un niveau de pression qui est de l'ordre du niveau de pression de l'alimentation.

3. Procédé selon la revendication 1 ou 2,
**caractérisé en ce que**
le niveau de pression d'alimentation est atteint en chauffant le carburant à une température d'ébullition qui règne à la pression d'alimentation.

4. Procédé selon au moins l'une des revendications 1 à 3,
**caractérisé en ce que**
le carburant est chauffé dans le réservoir (1) à la température d'ébullition qui règne à la pression d'alimentation.

5. Procédé selon au moins l'une des revendications 1 à 4,
**caractérisé en ce que**
le chauffage est réalisé par une source de chaleur (6) prévue dans le réservoir cryogénique.

6. Procédé selon au moins l'une des revendications 1 à 5,
**caractérisé en ce qu'**
au moins un courant partiel (3a) de l'air d'aspiration est refroidi à une température à laquelle la majeure partie de l'eau contenue dans l'air d'aspiration est déposée.

7. Procédé selon au moins l'une des revendications 1 à 6,
**caractérisé en ce que**
le carburant cryogénique dans le réservoir cryogénique (1) est à la température d'ébullition qui règne à la pression d'alimentation.

8. Procédé selon au moins l'une des revendications 1 à 7,
**caractérisé en ce qu'**
une pression supérieure à 50 bars règne dans le réservoir cryogénique (1).

9. Procédé selon au moins l'une des revendications 1 à 7,
**caractérisé en ce qu'**
une pression de carburant supérieure à 100 bars règne dans le réservoir cryogénique (1).

10. Dispositif pour fournir un gaz de travail inflammable à partir de carburant cryogénique stocké sous forme cryogénique et d'air d'aspiration contenant de l'oxygène dans la chambre de combustion d'un moteur à combustion interne (8), comportant :
- un réservoir de stockage de carburant (1) pour stocker un gaz de travail inflammable,
- une installation d'évacuation (2) pour évacuer du carburant cryogénique hors du réservoir de carburant,
- une installation d'alimentation (5) pour introduire dans une chambre de combustion ou une chambre de travail d'un moteur à combustion interne (8) séparément de l'air d'aspiration le carburant cryogénique évacué,
le réservoir de carburant (1) étant conçu sous forme de réservoir de pression pour une pression intérieure de réservoir qui correspond au moins à la pression d'alimentation du carburant dans l'air d'aspiration comprimé et
un échangeur de chaleur (6) est prévu pour chauffer le carburant cryogénique par l'air d'aspiration côté moteur à combustion interne (8),
**caractérisé par**
une installation de dosage (12) pour doser un courant partiel (3a) d'air d'aspiration acheminé à l'échangeur de chaleur (6).

11. Dispositif selon la revendication 10,
**caractérisé en ce que**
le réservoir de carburant (1) est muni d'une installation de chauffage (6) pour chauffer le carburant à une température d'ébullition qui règne à la pression d'alimentation.
